Europäisches Patentamt

European Patent Office

Office européen des brevets

(19)

(11) Numéro de publication : **0 043 070**
**B1**

(12)

# FASCICULE DE BREVET EUROPÉEN

(45) Date de publication du fascicule du brevet :
30.10.85

(51) Int. Cl.⁴ : **H 01 M   2/20**

(21) Numéro de dépôt : **81104808.1**

(22) Date de dépôt : **23.06.81**

(54) **Ensemble générateur électrochimique à électrolyte alcalin et fils de sortie de courant.**

(30) Priorité : **30.06.80 FR 8014533**

(43) Date de publication de la demande :
**06.01.82 Bulletin 82/01**

(45) Mention de la délivrance du brevet :
**30.10.85 Bulletin 85/44**

(84) Etats contractants désignés :
**AT BE CH DE FR GB IT LI LU NL SE**

(56) Documents cités :
**FR-A- 924 795**
**FR-A- 986 842**
**FR-A- 1 218 322**
**GB-A- 1 203 933**
**US-A- 4 199 340**

(73) Titulaire : **Société Anonyme dite SAFT**
**156, avenue de Metz**
**F-93230 Romainville (FR)**

(72) Inventeur : **Bernard, Alain**
**18, rue Branly**
**F-33600 Pessac (FR)**
Inventeur : **Bonnaterre, Raymond**
**17, rue Francis Planté**
**F-33700 Merignac (FR)**

(74) Mandataire : **Weinmiller, Jürgen et al**
**Zeppelinstrasse 63**
**D-8000 München 80 (DE)**

Jouve, 18, rue St-Denis, 75001 Paris, France

EP 0 043 070 B1

## Description

La présente invention concerne un ensemble d'un générateur électrochimique à électrolyte alcalin et des fils de sortie de courant en liaison avec ses bornes positive et négative. Elle concerne plus particulièrement, mais non exclusivement, les ensembles où le générateur est de faibles dimensions, par exemple du type bouton.

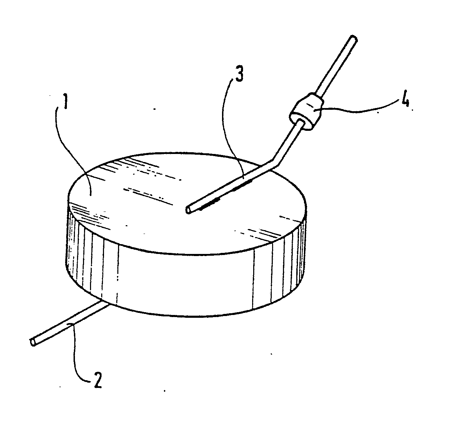

Lorsque de tels générateurs sont employés comme source de courant dans des appareils délicats, comportant par exemple des circuits électroniques, il est absolument essentiel que leur électrolyte ne parvienne pas au contact desdits appareils. Or on sait que la potasse qui forme souvent cet électrolyte a toujours tendance à cheminer surtout le long des surfaces métalliques polarisées négativement. Plus particulièrement dans le cas des générateurs secondaires qui, non seulement sont actifs plus longtemps que les générateurs primaires, mais souvent subissent des contraintes dues à des variations de masse active entre l'état chargé et l'état déchargé, ce phénomène finit par se produire à la longue et le fil négatif de sortie de courant transmet à l'appareil utilisateur la potasse du générateur. Il est possible de prendre des mesures spéciales de renforcement de l'étanchéité des générateurs pour empêcher toute fuite d'électrolyte, même à la longue. Selon le document FR-A-1 218 322 (Voir Fig. 3) une telle étanchéité est assurée autour d'une borne polaire traversant le couvercle d'un bac d'accumulateur en soudant la borne dans une perle de verre qui est enchâssée dans un chaton qui a été formé dans le couvercle. Mais bien entendu ces mesures grèvent lourdement le prix de revient du générateur.

La présente invention a pour but d'écarter ces inconvénients et d'arrêter les fuites d'électrolyte qui se produisent à la longue avec des générateurs d'une étanchéité moyenne.

Elle a pour objet un ensemble générateur électrochimique à électrolyte alcalin et fils de sortie de courant en liaison électrique avec les bornes positive et négative du générateur, caractérisé par le fait que le fil métallique correspondant à la borne négative est entouré, à proximité de ladite borne, et entièrement à l'extérieur du générateur, d'une perle en un verre pratiquement inaltérable par ledit électrolyte.

On constate que l'électrolyte qui a pu cheminer sur la borne négative du générateur, puis sur le fil de sortie de courant, est absolument arrêté par la perle de verre.

Pour éviter tout contact de l'électrolyte (la potasse par exemple) avec l'appareil on peut enrober l'ensemble dans un matériau polymère isolant, soit compact, soit sous forme de mousse. Il est à remarquer que cette mesure, sans l'existence de la perle de verre, est inopérante, la potasse cheminant le long des surfaces métalliques noyées dans le matériau isolant aussi bien qu'à l'air libre, sinon mieux car elle ne se carbonate pas.

Bien entendu le générateur peut être constitué par une batterie d'accumulateurs ou de piles au lieu d'un seul accumulateur ou d'une seule pile.

L'invention sera mieux comprise à l'aide de l'exemple de réalisation décrit ci-après en relation avec le dessin annexé dans lequel la figure unique représente en perspective un ensemble selon l'invention.

La référence 1 désigne un accumulateur alcalin nickel-cadmium du type bouton que l'on voit sur son côté négatif. Les accumulateurs boutons comportent un boîtier constitué par deux coupelles, l'une électriquement connectée à l'électrode positive l'autre électriquement connectée à l'électrode négative, isolées l'une de l'autre par un joint isolant. Un fil métallique 2 soudé à la coupelle positive invisible du bouton constitue la sortie de courant positive et un fil métallique 3 soudé à la coupelle négative, seule visible sur la figure, constitue la sortie de courant négative de l'accumulateur 1. Le fil 2 est soudé par tout moyen approprié à la coupelle positive et le fil 3 à la coupelle négative. Sur le fil 3 se trouve une perle de verre 4 entourant complètement le fil. De telles unités, fil et perle de verre se trouvent dans le commerce. Elles sont de deux sortes. Lorsque le verre qui constitue la perle a un coefficient de dilatation thermique identique ou très voisin de celui du fil, celui-ci étant en alliage spécial, par exemple nickel, cobalt et fer, la perle de verre peut être nue. So ce n'est pas le cas, la perle est maintenue sur le fil en compression par une frette en métal.

S'il se produit une fuite d'électrolyte à l'endroit du joint, l'électrolyte chemine préférentiellement sur la coupelle négative et atteint le fil 3, le long duquel il « grimpe » également. La perle de verre 4 arrête l'électrolyte qui, sans elle, atteindrait l'appareil auquel l'accumulateur 1 fournit du courant. Bien entendu le verre doit être choisi aussi résistant que possible aux alcalis.

Des essais ont été faits sur des accumulateurs boutons soumis à des cycles thermiques très sévères, les uns comportant la perle de verre selon l'invention, les autres de l'art antérieur n'en comportant pas. Afin de rendre les essais plus probants et plus rapides on avait omis certaines précautions d'étanchéité au niveau du joint. Les ensembles étaient noyés soit dans une mousse de polyuréthane, soit dans une résine époxyde, seules les extrémités des sorties de courant sortant de l'enrobage.

Tous les accumulateurs ont été soumis au cycle thermique hebdomadaire suivant :
— 2 jours à 60 °C
— 1 jour à la température ambiante
— 2 jours à 60 °C
— 2 jours à la température ambiante.

Les sorties de courant négatives des accumulateurs de l'art antérieur ont commencé à fuir un mois après le début des essais. Au bout de quatre mois tous ces accumulateurs fuyaient, la potasse étant parvenue à l'extérieur de l'enrobage sur la sortie de courant négative, tandis qu'aucune fuite ne se manifestait sur les sorties de courant des accumulateurs comportant l'ensemble selon l'invention.

Bien entendu on peut apporter des variantes à l'exemple ainsi décrit sans sortir pour cela de l'invention. C'est ainsi qu'au lieu d'avoir un ensemble d'un accumulateur bouton et un fil métallique négatif muni d'une perle de verre, on peut avoir toute une batterie d'accumulateurs-boutons, la sortie de courant négative de la batterie étant munie d'une perle de verre. Les accumulateurs peuvent avoir d'autres formes que la forme bouton, et peuvent aussi être remplacés par des piles. L'enrobage n'est pas nécessaire pour arrêter la potasse s'il n'y a pas d'inconvénient à laisser exposés la coupelle négative et le fil. Cependant, s'il est utilisé, d'autres polymères que ceux de l'exemple peuvent être mis en œuvre, de préférence choisis parmi ceux qui sont résistants à la potasse.

## Revendications

1. Ensemble générateur électrochimique à électrolyte alcalin et fils (2, 3) de sortie de courant en liaison électrique avec les bornes positive et négative du générateur, caractérisé par le fait que le fil métallique (3) correspondant à la borne négative est entouré, à proximité de ladite borne, et entièrement à l'extérieur du générateur d'une perle en un verre (4) pratiquement inaltérable par ledit électrolyte.

2. Ensemble selon la revendication 1, caractérisé par le fait que ladite perle en verre est maintenue sur ledit fil en compression par une frette en métal.

3. Ensemble selon l'une des revendications 1 et 2, caractérisé par le fait qu'il est noyé dans un matériau polymère isolant.

## Claims

1. An electrochemical cell assembly having an alkaline electrolyte and current output wires (3) electrically connected to the positive terminal and negative terminal of the cell, characterized in that the metal wire (3) which corresponds to the negative terminal is surrounded, near said terminal and entirely outside the electric cell, with a glass bead (4) which is practically unalterable by said electrolyte.

2. An assembly according to claim 1, characterized in that said glass bead is held compressed on said wire by a metal band.

3. An assembly according to either one of claims 1 and 2, characterized in that the assembly is embedded in an insulating polymer material.

## Patentansprüche

1. Einheit aus einem elektrochemischen Generator mit alkalischem Elektrolyten und aus Stromausgangsdrähten (2, 3) in elektrischer Verbindung mit den positiven und negativen Klemmen des Generators, dadurch gekennzeichnet, daß der der negativen Klemme entsprechende Metalldraht (3) in der Nähe dieser Klemme und ganz außerhalb des Generators von einer Glasperle (4) umschlossen ist, die durch diesen Elektrolyten praktisch nicht verändert werden kann.

2. Einheit nach Anspruch 1, dadurch gekennzeichnet, daß die Glasperle auf dem Draht von einem Metallband in Kompression gehalten wird.

3. Einheit nach einem der Ansprüche 1 und 2, dadurch gekennzeichnet, daß sie in ein isolierendes Polymermaterial eingebettet ist.